# EUROPEAN PATENT APPLICATION

(11) **EP 4 114 010 A2**
(43) Date of publication of application: **04.01.2023**
(21) Application number: 22150529.0
(22) Date of filing: 07.01.2022
(51) Int. Cl.: H04N 21/2187, H04N 21/254, H04N 21/478

(54) **METHOD AND APPARATUS FOR INFORMATION INTERACTION IN LIVE BROADCAST ROOM**

(30) Priority: 30.06.2021 CN 202110740018
(71) Applicant: Beijing Dajia Internet Information Technology Co., Ltd., Haidian District Beijing 100085 (CN)
(72) Inventor: LIU, Yang, Beijing, 100085 (CN)
(74) Representative: Angerhausen, Christoph

(57) **Abstract**

The disclosure provides a method and an apparatus for information interaction in a broadcast room. The method includes: receiving a repurchase request initiated against a target resource in historical order information; in response to the repurchase request, when a live broadcast room corresponding to an order of the target resource is in a live state, playing a live broadcast screen of the live broadcast room, and displaying repurchase request information corresponding to the target resource in a play interface.

## Description

### TECHNICAL FIELD

The disclosure relates to Internet technologies, and specifically relates to a method and an apparatus for information interaction in a live broadcast room, an electronic device and a storage medium.

### BACKGROUND

Live webcast with cargo is soon rise of new electric business model. In the network, a live broadcast room (also known as "virtual room") may sell resources of multiple virtual stores (including online commodities or virtual resources), and audiences of the live broadcast room generally order for resources broadcasted in the live broadcast room based on trust in an anchor. Compared with traditional business model, the ordering efficiency of the live webcast with cargo has been improved.

If a user wants to buy a certain resource again after he bought the resource through the live broadcast room, he generally enters into the corresponding network store to buy, and usually cannot enjoy preferential treatment of the live broadcast room. If the user wants to enjoy purchase discount of the live broadcast room again, he needs to spend a lot of time to find the live broadcast room of the anchor, and checks whether there is the resource being broadcasted in the live broadcast room, the process of which is complicated.

### SUMMARY

Embodiments of the disclosure provide a method and an apparatus for information interaction in a live broadcast room, an electronic device and a storage medium, to at least solve the complicated process of resource repurchase in the related art. The technical solutions of the disclosure are as follows.

According to a first aspect of embodiments of the disclosure, a method for information interaction in a live broadcast room is provided. The method is applied to a first terminal, and includes:
receiving a repurchase request initiated against a target resource in historical order information;
in response to the repurchase request, in a live state of a live broadcast room corresponding to an order of the target resource, playing a live broadcast screen of the live broadcast room, and displaying repurchase request information corresponding to the target resource in a play interface.

According to a second aspect of embodiments of the disclosure, a method for information interaction in a live broadcast room is provided. The method is applied to a second terminal, and includes:
receiving repurchase request information for a target resource sent by a first terminal in a live state of a live broadcast room, wherein the target resource is a historical broadcasting resource of the live broadcast room;
in response to the repurchase request information for the target resource meeting a preset condition, displaying the repurchase request information corresponding to the target resource in a play interface of the live broadcast room.

According to a third aspect of embodiments of the disclosure, an apparatus for information interaction in a live broadcast room is provided. The apparatus is applied to a first terminal, and includes:
a request receiving unit, configured to receive a repurchase request initiated against a target resource in historical order information;
a request responding unit, configured to, in response to the repurchase request, in a live state of a live broadcast room corresponding to an order of the target resource, display a live broadcast screen of the live broadcast room, and display repurchase request information corresponding to the target resource in a play interface.

According to a fourth aspect of embodiments of the disclosure, an apparatus for information interaction in a live broadcast room is provided. The apparatus is applied to a second terminal, and includes:
a request receiving unit, configured to receive repurchase request information for a target resource sent by a first terminal in a live state of a live broadcast room, wherein the target resource is a historical broadcasting resource of the live broadcast room;
a request displaying unit, configured to, in response to the repurchase request information for the target resource meeting a preset condition, display the repurchase request information corresponding to the target resource in a play interface of the live broadcast room.

According to a fifth aspect of embodiments of the disclosure, an electronic device is provided, including:
a processor; and
a memory, configured to store instructions executable by the processor,
wherein the processor is configured to implement the method according to any above embodiment by executing the instructions.

According to a sixth aspect of embodiments of the disclosure, a computer-readable storage medium is provided. When instructions in the computer-readable storage medium are executed by a processor of an electronic device, the electronic device is caused to implement method according to any above embodiment.

According to a seventh aspect of embodiments of the disclosure, a computer program product is provided, including computer instructions that, when executed by a processor, implement the method according to any above embodiment.

The repurchase request initiated against the target resource in historical order information is received, and in response to the repurchase request, state information of the live broadcast room where the target resource is bought is obtained. When the live broadcast room is in the live state, the live broadcast screen of the live broadcast room is displayed, and repurchase request information corresponding to the target resource is displayed in the play interface. Therefore, if a repurchase request is initiated for a purchased resource in historical orders, the corresponding live broadcast room can be quickly located and the repurchase request information of the resource can be displayed in the live broadcast room, which is conducive to simplifying the processing process of resource repurchase and improving the efficiency of users' repurchase for resources in the live broadcast room.

It should be understood that the general description above and the detailed description below are illustrative and explanatory only and do not limit the disclosure.

### BRIEF DESCRIPTION OF THE DRAWINGS

The appended drawings herein are incorporated into and form part of this specification, show embodiments consistent with this disclosure, and are used together with the specification to explain the principles of this disclosure, and do not constitute an improper restriction to this disclosure.
FIG. 1 is a schematic diagram of an application environment of a method for information interaction in a live broadcast room according to an embodiment of the disclosure.
FIG. 2 is a flowchart of a method for information interaction in a live broadcast room according to an embodiment of the disclosure.
FIG. 3 is a schematic diagram of an interface of a method for information interaction in a live broadcast room according to an embodiment of the disclosure.
FIG. 4 is a schematic diagram of an interface of a method for information interaction in a live broadcast room according to another embodiment of the disclosure.
FIG. 5 is a flowchart of a method for information interaction in a live broadcast room according to another embodiment of the disclosure.
FIG. 6 is a flowchart of a method for information interaction in a live broadcast room according to another embodiment of the disclosure.
FIG. 7 is a block diagram of an apparatus for information interaction in a live broadcast room at a terminal side according to an embodiment of the disclosure.
FIG. 8 is a block diagram of an apparatus for information interaction in a live broadcast room at a server side according to an embodiment of the disclosure.
FIG. 9 is a schematic diagram of an electronic device according to an embodiment of the disclosure.
FIG. 10 is a schematic diagram of an electronic device according to another embodiment of the disclosure.

### DETAILED DESCRIPTION

In order to make those skilled in the art better understand the disclosed technical solutions, the technical solutions in embodiments of the disclosure will be clearly and completely described in combination with the attached drawings below.

It should be noted that terms "first" and "second" in this disclosed specification and claims and the appended drawings are used to distinguish similar objects and need not be used to describe a specific order or sequence. It should be understood that the data so used may be interchangeable where appropriate, so that the disclosed embodiments described herein may be implemented in a sequence other than those illustrated or described herein. The implementations described in the following exemplary embodiments do not represent all implementations consistent with this disclosure. Rather, they are merely examples of devices and methods that are consistent with some aspects of this disclosure as detailed in the attached claims.

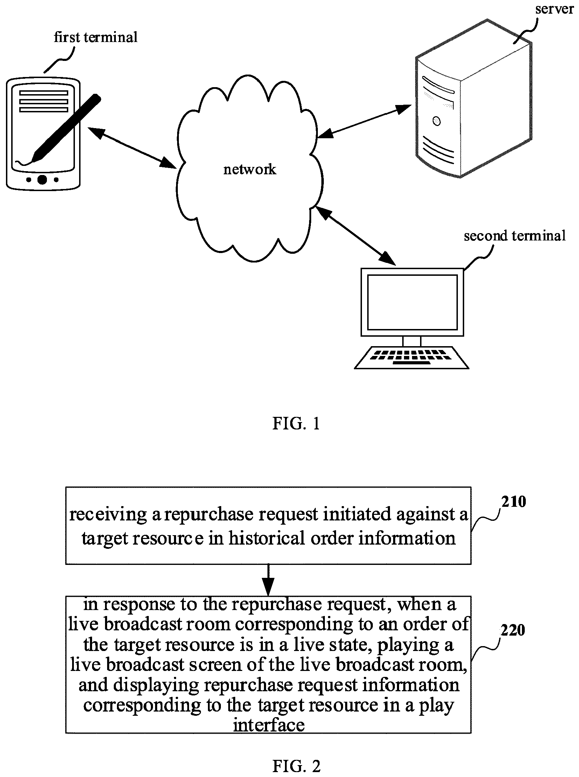

The method for information interaction in a live broadcast room provided in this disclosure can be applied to the application environment as shown in FIG. 1, including a first terminal, a second terminal and a server. The first terminal and the second terminal are respectively terminals corresponding to user accounts playing different roles in the live broadcast room. For example, the first terminal is the terminal corresponding to the audience of the live broadcast room, and there may be multiple first terminals. The audience can enter the live broadcast room of the anchor through the first terminal, to watch or play a screen corresponding to the live broadcast room (the terminal corresponding to the audience is also known as "audience terminal"). The second terminal is the terminal corresponding to the anchor in the live broadcast room, through which the anchor can create the live broadcast room and broadcast live (the terminal corresponding to the anchor is also called "anchor terminal"). The server may be used as the server of the live broadcast room to exchange information with the first terminal and the second terminal, which is used to realize the data stream synchronization between the anchor terminal and the audience terminal.

In this disclosure, the first terminal and the second terminal may be electronic devices with built-in live broadcast function, which may be but not limited to a variety of personal computers, laptops, smart phones and tablet computers. The server may be but is not limited to an independent server or a server cluster composed of multiple servers.

FIG. 2 is a flowchart of a method for information interaction in a live broadcast room according to an embodiment of the disclosure. As illustrated in FIG. 2, the method is applied to the first terminal (i.e., the audience terminal of the live broadcast room) as an example, and includes following operations 210-220.

At 210, a repurchase request initiated against a target resource in historical order information is received. An order corresponding to the target resource is generated based on the live broadcast room.

In this disclosure, the historical order information may be viewed on an order details page of a shopping platform or through a preset order entrance of the live broadcast room. The historical order information developed based on the order details page of the shopping platform contains multiple order information of a user in the past. The generation channels of orders may be diversified, for example, some orders are generated by placing orders in the live broadcast room, while others are generated by placing orders in other ways. The historical order information based on the live broadcast room mainly refers to the order information associated with the live broadcast room, such as the order information placed through the live broadcast room.

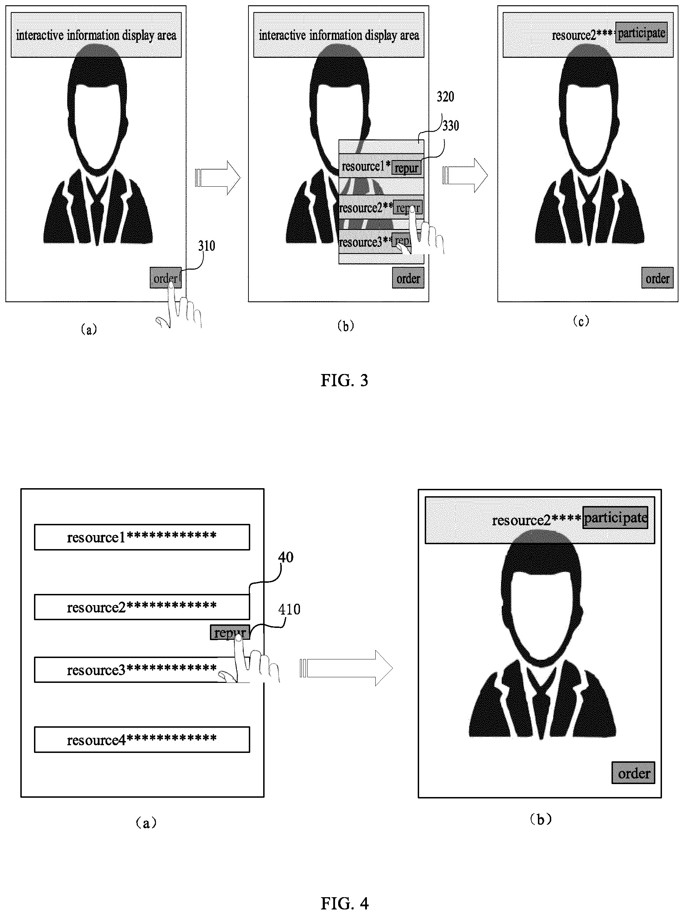

In an embodiment, a corresponding operation control is displayed in a play interface as the order entrance, and the historical order information may be expanded based on the live broadcast room as follows. In a play state of the live broadcast room, a trigger operation for the preset order entrance in the play interface of the live broadcast is received, and in response to the trigger operation, the historical order information of the current user account is obtained, in which the historical order information is order information associated with the live broadcast room, and then the historical order information is displayed in the play interface of the live broadcast room. As shown in FIG. 3, the most on the left side is the play interface of the live broadcast room, preset with the operation control 310 as the order entrance. The user clicks the operation control 310, and an order information window 320 is displayed, as shown in the middle figure (b). In the order information window 320, the historical order information placed by the user in the past through the live broadcast room may be viewed, and the user can initiate the repurchase request for each resource in the order information window 320.

The target resource in this disclosure is the resource purchased through the live broadcast room. Therefore, the historical order information expanded through the above means contains at least one resource purchased through the live broadcast room, which may be the resource placed and purchased, or the resource placed but not purchased.

In one example, a page/window for historical order information is opened in the same way as described above, where the corresponding repurchase entrance control is provided for resources purchased through the live broadcast room. The repurchase request for the target resource may be initiated in the following ways: displaying the historical order information, which contains at least one resource purchased through the live broadcast room; receiving the trigger operation on the repurchase entrance control corresponding to the target resource in the historical order information, to generate the repurchase request initiated against the target resource. The repurchase entrance control may be displayed in the historical order information in an explicit way or a hidden way. The explicit way refers to displaying a button for repurchase at a corresponding position of the target resource in the order information display page, as the repurchase request control, and the user can trigger the button to initiate the repurchase request for the target resource. The hidden way refers to that, the in the order information display page, when the user clicks the order information corresponding to the target resource, a button for repurchase is displayed on the order information corresponding to the target resource, and the user can trigger the button to initiate the repurchase request for the target resource.

As an example, as shown in FIG. 4, the one figure a on the left side is the history order page expanded based on the shopping platform, which contains order information of multiple resources, including at least one resource order 40 placed through the live broadcast room. A repurchase button 410 is provided below the resource order 40. The user can initiate the repurchase request for resource 2 in the resource order 40 by clicking on the repurchase button 410.

As another example, as shown in figure B in FIG. 3, a repurchase button 330 is provided in the order information window 320. The user can initiate the repurchase request for corresponding resource 2 by clicking the repurchase button corresponding to resource 2.

At 220, in response to the repurchase request, when the live broadcast room corresponding to the order of the target resource is in a live state, a live broadcast screen of the live broadcast room is played, and repurchase request information corresponding to the target resource in displayed in a play interface.

In this disclosure, in response to the repurchase request, the live broadcast room corresponding to the target resource, that is, the live broadcast room corresponding to the order of the target resource, can be obtained based on the order information, and the current status information of the live broadcast room can be further obtained. For example, the user links to the purchase page of resource A through the live broadcast room of anchor A and places an order for resource A, from which the historical order information of resource A can be obtained. When the user initiates the repurchase request based on resource A in the historical order information, the live broadcast room corresponding to resource A can be obtained as the live broadcast room of anchor A. If anchor A corresponds to multiple live broadcast rooms, and different live broadcast rooms correspond to different live broadcast room identifiers, then which live broadcast room of anchor A corresponding to resource A can be determined according to the live broadcast room identifiers in the historical order information of resource A.

With above embodiments of the disclosure, for the target resource in historical order information, the user can quickly determine the live broadcast room through which the target resource is purchased in the past, and enter the live broadcast room, through the play interface of which displays the repurchase request information of the corresponding resource. Therefore, it is beneficial to improve the repurchase efficiency of historical broadcast resources in the live broadcast room by initiatively asking the anchor of the live broadcast room for the broadcast starting information of the corresponding resource.

In an embodiment, if the historical order information displayed in the above is the historical order information viewed through the order details page of the shopping platform, then the live broadcast room corresponding to the target resource can be determined based on the order information of the target resource. The live broadcast room may be currently in a live state, or in a non-live state. If it is in the live state, it is possible to jump to the play interface of the corresponding live broadcast room from the previous historical order information display page. As an example, repurchasable resources in the history order have repurchase controls used to initiate repurchase requests. The repurchasable resources refer to those purchased through the live broadcast room. As shown in FIG. 4, the one picture a on the left side of which is the history order page displayed through the shopping platform, after the user triggers the repurchase control 410 corresponding to the resource order 40 to initiate the repurchase request for resource 2 in the resource order 40, the corresponding live broadcast room with the room number 0001 is determined according to the order information of the resource order 40, and when the live broadcast room is currently live, the play interface of the live broadcast room with the room number 0001 is switched to from the history order page, and the repurchase request information for the corresponding resource 2 is displayed in the play interface.

In other embodiments, if the live broadcast room corresponding to the target resource is currently in the live state, a confirmation window may be provided first, for the user to confirm whether to enter the live broadcast room now. After the user confirms to enter the live broadcast room, the play interface of the live broadcast room is jumped to from the previously described historical order information display page, and the live broadcast screen of the live broadcast room is played.

In this case, when the user initiates the repurchase request for the resource purchased through the live broadcast room, it is generally that the corresponding resource is not available in the online store, or the price of the corresponding resource is higher than before, and the user hopes to repurchase the resource in the same live broadcast room based on the consideration of interests and the trust on the specific live broadcast room. Through the above example, the user does not need to find the corresponding live broadcast room and enter, especially when the user does not pay attention to the live broadcast room, which significantly improves the efficiency of entering the live broadcast room.

In another example, if the historical order information is the historical order information viewed by the user through the order entrance of the live broadcast room which is in the live state now, then after the user initiates the repurchase request for the target resource in the historical order information, the live broadcast room corresponding to the target resource, that is, the live broadcast room which is currently live, can be determined, and in this case, the display window of historical order information can be closed, and the live broadcast screen of the live broadcast room can be returned to play, and the repurchase request information corresponding to the target resource can be displayed in the play interface (as shown in figure C in FIG. 3).

As an example, as shown in FIG. 3, in the order information window 320, the user clicks on the repurchase button 330 corresponding to the resource order, to initiate the repurchase request for the resource 2 in the order, the live broadcast room corresponding to which order is the live broadcast room which is currently being played, and then the order information window 320 is closed from the play interface of the live broadcast room, and the live broadcast screen of the current live broadcast room is continued to be played. The play interface is shown in figure c in FIG. 3, and the repurchase request information for resource 2 is displayed in the play interface. In this case, there is no need for the user to search for the historical order information placed through a live broadcast room among numerous historical order information, which is beneficial to improve the efficiency of repurchasing the historical broadcast resources of the live broadcast room concerned by users.

In an example embodiment, the audience account initiates the repurchase application for the target resource, plays the live broadcast screen of the live broadcast room in the audience terminal, and displays the repurchase request information corresponding to the target resource in the play interface. After that, the method further includes: obtaining response information of an anchor account of the live broadcast room to the repurchase request, and displaying the response information in the play interface.

In some embodiments, after the user initiates the repurchase request for the target resource in the historical order information and enters the live broadcast room corresponding to the target resource, the repurchase request information for the target resource can be seen at all play sides of the live broadcast room, in which the repurchase request information may include related information, such as resource information of the target resource and a number of repurchased resources, a number of accounts for repurchase and a repurchase price. The anchor in the live broadcast room can also receive the repurchase request information of the target resource, and can accept or ignore the repurchase request information in response. Acceptance response refers to that the anchor accepts the repurchase request for the target resource and makes a response about when the target resource will be broadcast again in the live broadcast room. Ignoring response refers to that the anchor has no broadcast plan for the target resource now. When the anchor makes the acceptance response or the ignoring response, the audience terminal in the live broadcast room can display the response made by the anchor, so that the audience in the live broadcast room can timely grasp the repurchase request result of the target resource.

In another embodiment, after the audience terminal obtains the response information of the anchor account to the repurchase request for the target resource, the method further includes cancelling the display of the repurchase request information of the target resource in the play interface of the terminal. That is, after the anchor responds to the repurchase request for the target resources initiated by the audience account, there is no need for the audience terminal in the live broadcast room to continue to display the repurchase information corresponding to the target resources, so the corresponding repurchase request information will no longer be displayed, to reduce the interference to the audience watching the live broadcast in the live broadcast room.

In some embodiments, after the audience terminal obtains the response information of the anchor account of the live broadcast room to the repurchase request for the target resource, the method further includes: if the received response information is the acceptance response, obtaining a broadcast starting time set by the anchor terminal for the target resource, and displaying the broadcast starting time in the play interface.

With this embodiment, if the anchor of the live broadcast room makes the acceptance response to the repurchase request for the target resource, the audiences of the live broadcast room are generally notified of the starting time of next broadcast for the target resource (i.e., the broadcast starting time of the target resource). The anchor terminal can synchronize the acceptance response information and the set broadcast starting time to the audience terminal of the live broadcast room, which is convenient for the audience terminal to enter the live broadcast room in time to repurchase the target resource at the broadcast starting time.

In some embodiments, after the audience terminal receives the broadcast starting time from the anchor terminal, the user can also set an appointment reminder for the broadcast starting time of the resource, so as to remind the user of the audience terminal to enter the live broadcast room for repurchase in time before the broadcast starting time of the target resource.

With the above embodiments of the disclosure, after the user initiates the repurchase request for the target resource in the historical order information, and enters the play interface of the corresponding live broadcast room, the repurchase information of the target resource can be seen on the play interfaces of all audiences in the live broadcast room. The audience may also have the need to buy the same target resource, and for the convenience of the audience to initiate the repurchase request for the target resource to the anchor, in an embodiment, the repurchase request information of the target resource displayed in the play interface of the audience terminal can be configured as interactive information, and the audience account performs interaction operation based on the repurchase request information, which is convenient to initiate the repurchase request for the target resource. As an implementation, in the repurchase request information displayed in the play interface of the live broadcast room, an operational control (such as "attend" button as shown in figure c in FIG. 3, as well "participation" button as shown in figure 4 b in FIG. 4) are included, and the audience can conveniently initiate the repurchase request for the target resource by clicking on the operational control. Of course, the user can also initiate the repurchase request for the target resource from historical order information in the aforementioned way.

A backend server of the live broadcast room can count a number of repurchase accounts initiating the repurchase request for the target resource in real time. The counted number of repurchase accounts can include a number of a first kind of accounts that initiate repurchase requests based on the repurchase request information of the target resource displayed in the play interface, and can also include a number of a second kind of accounts that initiate repurchase requests based on the target resource in the historical order information. The first kind of accounts do not include any of the second kind of accounts to avoid double counting. After the number of repurchase accounts is counted, the information of the number of repurchase accounts can be synchronized to the anchor in the live broadcast room, so that the anchor can understand the demand of repurchases for the target resource and make decisions on whether to arrange the next broadcast for the target resource. The backend server of the live broadcast room can also synchronize the counted number of repurchase accounts to the audiences of the live broadcast room, so that the audiences can know the number of repurchase participants of the target resource and improve their attention to the target resource.

Accordingly, in an embodiment, after the audience terminal plays the live broadcast screen of the live broadcast room and displays the repurchase request information corresponding to the target resource in the play interface, the method further includes: obtaining the number of repurchase accounts corresponding to the target resource, in which the number of repurchase accounts includes a number of audiences that initiate repurchase requests based on interactive operation on the repurchase request information displayed in the play interface (i.e., the number of the first kind of accounts) and a number of the second kind of accounts that initiate repurchase requests based on the target resource in the historical order information, wherein the first kind of accounts do not include any of the second kind of accounts to avoid repeat counting; and displaying the number of repurchase accounts corresponding to the target resource in the play interface.

After the audience terminal obtains the number of repurchase accounts corresponding to the target resource from the server, when the number of repurchase accounts is inconsistent with the number of repurchase accounts obtained last time, the repurchase request information of the target resource displayed in the play interface is updated. When the number of repurchase accounts obtained this time is consistent with the number of repurchase accounts obtained in the previous time, the corresponding repurchase request information will not be updated. Thus, it is convenient for the anchor and audiences in the live broadcast rooms to know which resources have higher calls, which is conducive to improving the repurchase rate of corresponding resources.

In an embodiment, displaying the number of repurchase accounts corresponding to the target resource in the play interface includes: displaying a bullet screen corresponding to the target resource in the play interface, wherein the bullet screen includes information of the target resource and a participation control. The participation control is configured to initiate the repurchase request for the target resource when triggered. That is, the repurchase request information of the target resource is displayed in the way of bullet screen in the live broadcast room. Further, also in the bullet screen, the number of repurchase accounts for the target resource may be displayed. As an example, in the right area of the bullet screen, change information of the number of repurchase accounts for the target resource is dynamically displayed, for example, + 1, + 5, + 10, which correspondingly shows that for the target resource, the number of accounts participating in repurchase increases by 1, 5 and 10.

Furthermore, the display style and display duration of bullet screen can be dynamically changed according to the time priority of the repurchase request for the target resource and the number of repurchase accounts. For example, when the repurchase request for the target resource is just initiated, the corresponding bullet-screen information can stay in the live broadcast interface for a longer time, or appear more frequently in the live broadcast interface, so that the anchor and/or the audience can see the bullet-screen information. As another example, when more audiences click the participation button in the bullet screen, the number of people involved in the repurchase for the target resource increases, and the bullet-screen information corresponding to the target resource can stay in the live broadcast interface for a longer time, or appear in the live broadcast interface more frequently, so that the anchor and/or the audience know what resources have high popularity.

In an embodiment, after the audience terminal of the live broadcast room obtains the live broadcast room corresponding to the target resource, the method further includes: obtaining the current state of the live broadcast room; if the current state is the non-live state, displaying the broadcast reservation entrance corresponding to the live broadcast room, and receiving the broadcast reminder time configured through the broadcast reservation entrance; and outputting a reminder message to remind entering the live broadcast room at the arrival of the broadcast reminder time.

As stated in the foregoing, the historical order information may be the historical order information viewed by the user through the order details page. For the repurchase request for the target resource initiated based on the display page of the historical order information, the corresponding live broadcast room is determined based on the order information of the target resource, which currently may be in the live state, or may be in the non-live state. If the live broadcast room is in the non-live sate, the broadcast time information set by the anchor account of the live broadcast room can be obtained, and the broadcast time information can be output on the page of initiating the repurchase request. In addition, to prevent the user from missing the starting time of the live broadcast room, a broadcast remind function may be provided, based on which function, the user can set the broadcast reminder time according to the broadcast starting time set by the anchor for the live broadcast room, in which the broadcast reminder time may be set as 5 minutes, 10 minutes before the broadcast starting time, or equal to the broadcast starting time. At the arrival of the broadcast reminder time, the terminal outputs corresponding reminder information, which may be the notification message of the live broadcast terminal, short message reminder or audio reminder output based on the reserved contact phone of the user, so that the users who apply for repurchase can enter the live broadcast room in time and improve the repurchase rate of resources.

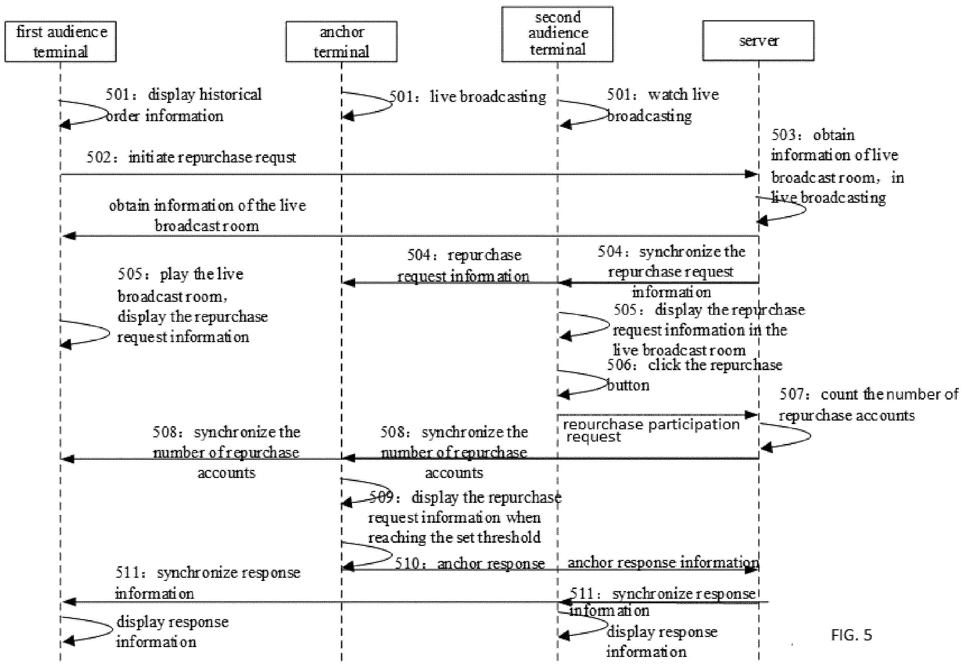

FIG. 5 is a more detailed flow chart of a method for information interaction in a live broadcast room according to an exemplary embodiment. As shown in FIG. 5, the method includes following operations 501-511.

At 501, the historical order information is displayed through the historical order page of the shopping platform in the first audience terminal of the first user. The anchor terminal of anchor W is broadcasting live. In the second audience terminal of the second user, the live broadcast room of the anchor account W is played.

At 502, the first audience terminal receives the repurchase request initiated by the first user for the target resource X in the historical order information. The target resource X is the resource purchased through the live broadcast room of the anchor account W.

At 503, the first audience terminal initiates the repurchase request to the server in response to the repurchase request.

At 504, the server obtains the live broadcast room corresponding to the target resource, for example the live broadcast room of the anchor account W, and returns the live broadcast data stream of the live broadcast room of the anchor account W to the first audience terminal when detecting that the live broadcast room is in the live state.

At 505, the server also generates the corresponding repurchase request information for target resource X, and synchronizes the repurchase request information to the audience terminal and anchor terminal in the live broadcast room of anchor account W.

If the current state of the live broadcast room of the anchor account W is not live broadcast, the server returns the status information that the live broadcast room is not live to the first audience terminal. After receiving the status information, the first audience terminal can output a prompt message, such as: the anchor is not live broadcasting now, please initiate again later. In other embodiments, the server can also obtain the broadcast starting time of the live broadcast room, and return the broadcast starting time to the first audience terminal. The first audience terminal can provide a broadcast reservation entrance for the live broadcast room to the first user, to receive the broadcast reminder time configured by the first user through the broadcast reservation entrance, and output the reminder message at the arrival of the broadcast reminder time, to remind entering the live broadcast room or initiating the repurchase for the target resource X again.

At 506, the first audience terminal obtains the live streaming data of the live broadcast room of anchor account W, plays the live broadcast screen of the live broadcast room of anchor account W, and displays the repurchase request information of target resource X in the play interface. In the live broadcast room of the anchor account W watched by the second audience terminal, the repurchase request information for target resource X also appears.

As an example, the live broadcast rooms of the first audience terminal and the second audience terminal can display the bullet screen of the repurchase request information for the target resource X. The bullet screen may include resource information of the target resource X, such as the resource size, price, and name, and may include repurchase data for target resource X at the preset stage, such as the number of repurchase requests and the number of repurchase accounts.

In some embodiments, the bullet screen may also contain a "participate" button. The audience can click the button to participate in the repurchase request for target resource X.

At 507, the second user clicks the "participate" button in the bullet screen of the target resource X through the second audience terminal, participates in the repurchase of target resource X, and sends the participation information of the second user to the server.

Other audiences in the live broadcast room of anchor account W can not only enter the order list of the live broadcast room to initiate the repurchase for target resource X, but can also click the bullet screen of target resource X that has appeared in the live broadcast room and click the "participate" button to participate in the repurchase of target resource X. No matter how the account participates in the repurchase of target resource X, the server can count it into the number of repurchase accounts of target resource X. However, the account that participates in the repurchase of target resource X in different ways will not be counted repeatedly.

At 508, the server synchronizes the number of people repurchasing target resource X to the audience terminal and anchor terminal in the live broadcast room.

In an embodiment, the audience terminal of the live broadcast room can further display the number of the repurchase accounts for the target resource X. For example, when it is detected that the number of repurchase accounts changes, in the right area of the bullet screen, the change information of the number of repurchase accounts is dynamically displayed, such as + 1, + 10, which correspondingly shows that for the target resource, the number of people participating in repurchase increases by 1 and 10.

At 509, the anchor terminal, based on the current number of repurchase accounts for the target resource X, determines whether the display threshold preset by anchor W is reached. If so, the anchor terminal displays the repurchase request information of target resource X, which may include the number of repurchase accounts, resource information and quantity of repurchased resources, etc.

In some embodiments, in order to prevent part of the audience users in the live broadcast room from inciting others, or prevent the live broadcast of the anchor from being affected by too much repurchase request information, the bullet screen of the target resource can appear in the anchor terminal only when the repurchase request information of the target resource satisfies a condition preset by the anchor account (i.e., the anchor can set the repurchase notification threshold in advance). When the repurchase request information of the target resource meets the condition set by the anchor, the anchor terminal can display the repurchase request notice of the target resource. The repurchase notification threshold set by the anchor may be the number of repurchase users, the price value of resource or the number of times of historical broadcasting of the resource.

At 510, in the anchor terminal, the anchor makes a response to the repurchase request information corresponding to target resource X. For example, anchor W selects [reply] and sets the starting time of the next broadcast for target resource X. The anchor terminal synchronizes the response information to the audience terminal in the live broadcast room of anchor W. The anchor terminal sends the response information of the anchor to the server.

In some embodiments, when the anchor terminal displays the repurchase request information corresponding to the target resource X, it also provides the response operation entrance to the anchor, for example, the response operation control [reply] and the response operation control [ignore] are included. The anchor can make the response through the control operation of [reply] and [ignore].

When anchor W clicks "answer", the anchor terminal may provide an inquiry window to ask anchor W whether repurchase for target resource X can be performed in this live broadcast, or to give the broadcast starting time of target resource X.

In an embodiment, no matter anchor W clicks [reply] or [ignore], the repurchase request channel of target resource X will be closed this time, including no longer displaying the repurchase request information of target resource X in the current live broadcast room of the anchor terminal. In addition, the users associated with the live broadcast room of anchor W (such as, users paying attention to the live broadcast room of anchor W, users who are currently watching the live broadcast room of anchor W) can receive corresponding notice, so that when the user associated with the live broadcast room initiates the repurchase request for target resource X again later, it is possible to prompt the user based on the response information of the anchor W, such as: the anchor of this resource has arranged to broadcast again at ^{∗∗∗} time, or the anchor of this resource has rejected the repurchase request. Through this embodiment, the interference of repurchase request information to anchor can be reduced.

Further, in an embodiment, the background server can determine whether anchor W is willing to use the resource repurchase function according to the response information of anchor W. If anchor W chooses to ignore the resource repurchase request initiated by users for a long time, anchor W can be reminded to close the resource repurchase function when anchor W starts broadcasting. After that, the anchor terminal of anchor W will no longer display user's repurchase request information, and the associated users of the live broadcast room can no longer initiate repurchase requests related to the live broadcast room.

At 511, the server synchronizes the response information of the anchor to the audience terminal of the live broadcast room, and then the response information of anchor W to the repurchase request for target resource X will be displayed in the live broadcast room of anchor W played by the first audience terminal and the second audience terminal. If the response made by anchor is to accept the repurchase request, the broadcast starting time set by the anchor for target resource X can also be displayed in the live broadcast room of the first audience terminal and the second audience terminal.

If the broadcast starting time for the target resource X is clear, the server can synchronize the response information to the audience terminals of the live broadcast room of anchor W, guide the audience user of the live broadcast room to set repurchase reminder. If the audience user successfully set the repurchase reminder, then when the broadcast starting time arrives and the anchor starts to broadcast, the server notifies the user of the audience terminal to enter the live broadcast room for repurchase through push, IM or short message.

With the above embodiments, the first user and the second user can initiatively send the repurchase request for the target resource X to the anchor, and the server can count repurchase request data in the data statistical dimension of resources or live broadcast rooms, and can also synchronize the counted repurchase request data to the anchor, so that the anchor can more timely know the users' repurchase demand of resources, and based on which, can make better decisions about which resources to broadcast in the live broadcast room.

Further, if the user successfully repurchases target resource X through the live broadcast room of anchor W, the server can count successful repurchase data in the data statistical granularity of resources or live broadcast rooms. In addition, the relevant statistical data can be synchronized to anchor W, and the number of successful repurchase of each resource and information of repurchase resource can also be learned from anchor W.

It could be understood that the server can adjust the data statistical dimension according to specific scenarios, so as to provide more meaningful data for the audience users of the live broadcast room and the anchor.

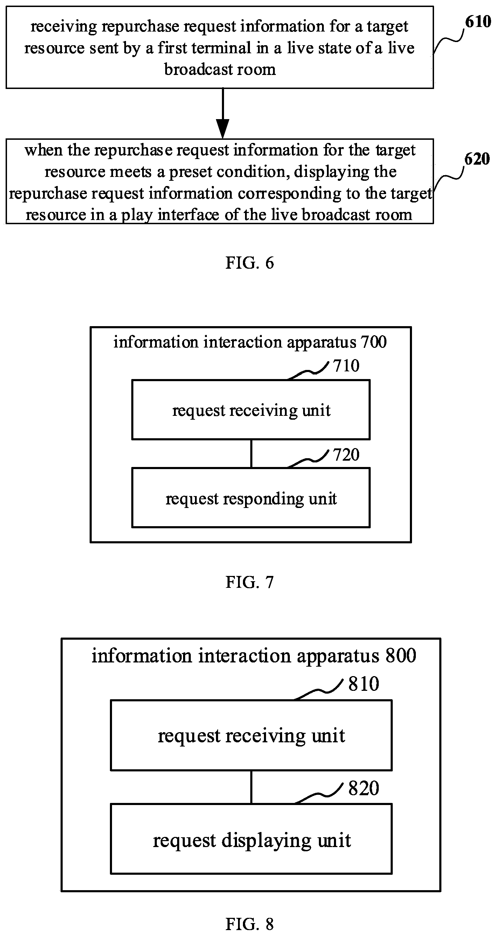

FIG. 6 is a flow chart of a method for information interaction in a live broadcast room according to an example embodiment, taking the side of the second terminal (i.e. the anchor terminal in the live broadcast room) as an example to illustrate. The method for information interaction in a live broadcast room includes the following operations 610-620.

At 610, the repurchase request information for the target resource sent by the first terminal (i.e. the audience terminal of the live broadcast room) is received in the live state of live broadcast room. The target resource is the historical broadcast resource of the live broadcast room.

As stated in the above embodiments, the repurchase request information for the target resource received by the anchor terminal may be the repurchase request initiated by the user based on the target resource in the historical order information of the shopping platform, and may also be the repurchase request initiated by the audience of the live broadcast room through the target resource associated with live broadcast room found at the order entrance of the live broadcast room, and may also be the repurchase request initiated by the audience in the live broadcast room through the bullet screen corresponding to the target resource in the live broadcast room.

At 620, when the repurchase request information for the target resource meets the preset condition, the repurchase request information corresponding to the target resource is displayed on the play interface of the live broadcast room.

As illustrated in the above embodiments, in the host terminal, the repurchase request information corresponding to the target resources can be displayed in real time, and the corresponding repurchase notification threshold can be set, as the preset condition for displaying the repurchase request information corresponding to the target resource in the anchor terminal. Only when the preset condition is satisfied, the repurchase request information corresponding to the target resource is displayed through the anchor terminal, otherwise, is not displayed, in order to avoid the interference of too much repurchase request information to the anchor.

With the above embodiments, if the anchor is in the state of live broadcasting, he can receive the repurchase request information initiated by users for the historical broadcast resources of the live broadcasting room, so that he can know which resources have higher user demands and make live broadcasting decisions in accordance with users' demands.

In an embodiment, after the anchor terminal receives the repurchase request information for the target resource, the method for information interaction in a live broadcast room further includes:
determining whether the repurchase request information for the target resource meets the preset condition; if so, displaying the repurchase request information corresponding to the target resource on the play interface of the live broadcast room, in which the preset conditions includes at least one of the following: the number of repurchase accounts for the target resource reaching the preset number, the number of number of historical broadcasting of the target resource reaching the set number of times, and the resource price value of the target resource reaching the set price value. With this embodiment, the interference of repurchase request information to the anchor can be avoided.

In an embodiment, after the anchor terminal displays the repurchase request information corresponding to the target resource on the play interface of the live broadcast room, the method further includes: obtaining a number of repurchase accounts corresponding to the target resource, wherein the number of repurchase accounts comprises a number of a first kind of accounts that initiate repurchase requests based on interactive operation on the repurchase request information displayed in the play interface of the live broadcast room and a number of a second kind of accounts that initiate repurchase requests based on the target resource in a historical order list, wherein the first kind of accounts do not include any of the second kind of accounts; and displaying the number of repurchase accounts in the play interface of the live broadcast room

In this embodiment, the anchor can obtain the statistical repurchase data of the target resource, which is beneficial to know the demand degree of target resource and optimize the arrangement of the subsequent live broadcast of resources.

In an embodiment, after the anchor terminal displays the repurchase request information corresponding to the target resource on the play interface of the live broadcast room, the method further includes: receiving response information of the anchor account of the live broadcast room to the repurchase request information; synchronizing the response information to the audience terminals of the live broadcast room, so as to display the response information in the play interface of the audience terminal.

In this embodiment, the repurchase response information made by the anchor will be synchronized to the audience in the live broadcast room, reducing multiple repurchase requests for the same resource and helping to reduce the amount of data interaction in the live broadcast room.

In an embodiment, after the anchor terminal receives the response information of the anchor account of the live broadcast room to the repurchase request information, the method further includes: in response to the response information indicating accepting the repurchase request for the target resource, obtaining the broadcast starting time set by the anchor account for the target resource; and synchronizing the broadcast starting time to the audience terminal of the live broadcast room, so as to display the broadcast starting time in the play interface of the audience terminal.

In this embodiment, if the anchor arranges the target resource in this live broadcast, the information displayed in the live broadcast room can inform the audience of the broadcast starting time of the target resource, so as to facilitate the audience to obtain the accurate broadcast starting time of the resource.

In an embodiment, after receiving response information of the anchor account of the live broadcast room to the repurchase request information, the method further includes: in response to the response information indicating ignoring the repurchase request for the target resource, obtaining a number of times of ignoring repurchase requests in historical response information of the anchor account for the repurchase request information in the live broadcast room; in response to the number of times reaching a set threshold, closing a repurchase channel of the live broadcast room.

With this embodiment, based on the statistics of response behaviors of the anchor to the repurchase request information, the operation habit and usage preference of the anchor corresponding to repurchase request information can be obtained. When the anchor ignores the repurchase request information for many times, the repurchase channel of the anchor terminal is closed to avoid the interference of the subsequent repurchase request information on the anchor. In addition, after the repurchase channel of the anchor terminal is closed, the historical order query entrance of the live broadcast room can be closed at the same time, or the repurchase request function of the historical order information of the live broadcast room can be closed. The audience cannot initiate repurchase request to the anchor through the live broadcast room, which reduces unnecessary interactive data.

In an embodiment, after the anchor terminal receives the response information of the anchor account in the live broadcast room to the repurchase request information, the method further includes: cancelling the display of the repurchase request information of the target resource in the live broadcast interface of the live broadcast room.

With this embodiment, the corresponding repurchase request information will no longer be displayed after the anchor makes a response, so as to reduce the interference of the displayed repurchase information to the anchor.

In an embodiment, there are multiple target resources. The anchor terminal displays the repurchase request information corresponding to the target resource through the current live broadcast room as follows. The anchor terminal obtains the repurchase index data corresponding to each target resource. The repurchase index data includes at least one of the number of repurchase participants, initiating time, the number of times of broadcasting and resource price value. Based on the repurchase index data, the anchor terminal determines the display order of repurchase request information of multiple target resources, and displays the repurchase request information of multiple target resources in the current live broadcast room according to the display order.

With this embodiment, when an audience initiates the repurchase request for multiple resources, the anchor can configure the display priority or display order of the repurchase information of multiple resources to avoid the anchor missing the repurchase information of the resources he cares about.

It should be understood that although the steps in the above flowchart are shown in sequence as indicated by the arrows, they are not necessarily executed in the order indicated by the arrows. Unless explicitly stated in this disclosure, there is no strict order in which these steps can be performed, and they can be performed in any other order. Moreover, at least part of the steps in the above flowchart may include multiple steps or stages, which are not necessarily executed at the same moment, but can be executed at different moments, and the execution sequence of these steps or stages is not necessarily sequential. Instead, they may be performed alternately or in turn with other steps or at least parts of steps or phases within other steps.

FIG. 7 is a block diagram of an apparatus 700 for information interaction in a live broadcast room according to an embodiment. The apparatus 700 may be applied to a first terminal, and may include a request receiving unit 710 and a request responding unit 720.

The request receiving unit 710 is configured to receive a repurchase request initiated against a target resource in historical order information. An order corresponding to the target resource is generated based on the live broadcast room.

The request responding unit 720 is configured to, in response to the repurchase request, when a live broadcast room corresponding to an order of the target resource is in a live state, display a live broadcast screen of the live broadcast room, and display repurchase request information corresponding to the target resource in a play interface.

In an embodiment, the apparatus 720 further includes an anchor response displaying unit, configured to:
obtain response information of an anchor account of the live broadcast room to the repurchase request; and
display the response information in the play interface.

In an embodiment, the anchor response displaying unit is further configured to:
in response to the response information indicating accepting the repurchase request, obtain a broadcast starting time of the target resource set by the anchor account; and
display the broadcast starting time in the play interface.

In an embodiment, the anchor response displaying unit is further configured to:
cancel display of the repurchase request information in the play interface after obtaining the response information of the anchor account of the live broadcast room to the repurchase request for the target resource.

In an embodiment, the apparatus 700 further includes a number displaying unit, configured to:
obtain a number of repurchase accounts corresponding to the target resource, wherein the number of repurchase accounts comprises a number of a first kind of accounts that initiate repurchase requests based on interactive operation on the repurchase request information displayed in the live broadcast room and a number of a second kind of accounts that initiate repurchase requests based on the target resource in the historical order information, wherein the first kind of accounts do not include any of the second kind of accounts; and
display the number of repurchase accounts corresponding to the target resource in the play interface of the live broadcast room.

In an embodiment, the request responding unit 720 is configured to display a bullet screen corresponding to the target resource in the play interface of the live broadcast room, wherein the bullet screen includes information of the target resource and a participation control, wherein, the participation control is configured to initiate the repurchase request for the target resource when triggered.

In an embodiment, the historical order information includes a repurchase control for initiating a repurchase request for repurchasable resources. The repurchasable resources refer to resources purchased through live broadcast rooms. The request receiving unit 710 is configured to receive the repurchase request initiated against the target resource through the repurchase control.

In an embodiment, the apparatus 700 further includes an order obtaining unit, configured to:
receive a trigger operation on a preset order entry in the play interface of the live broadcast room;
in response to the trigger operation, obtain the historical order information of a current user account, wherein the historical order information comprises order information associated with the live broadcast room;
display the historical order information.

FIG. 8 is a block diagram of an apparatus 800 for information interaction in a live broadcast room according to an embodiment. The apparatus 800 may be applied to a second terminal, and may include a request receiving unit 810 and a request displaying unit 820.

The request receiving unit 810 is configured to receive repurchase request information for a target resource sent by a first terminal in a live state of a live broadcast room, wherein the target resource is a historical broadcasting resource of the live broadcast room.

The request displaying unit 820 is configured to, when the repurchase request information for the target resource meets a preset condition, display the repurchase request information corresponding to the target resource in a play interface of the live broadcast room.

In an embodiment, the preset condition includes at least one of:
a number of repurchase accounts corresponding to the target resource reaching a set number,
a number of historical broadcast times of the target resource reaching a set number of times,
a price value of the target resource reaching a set price value.

In an embodiment, the apparatus 800 further includes a number displaying unit, configured to:
obtain a number of repurchase accounts corresponding to the target resource, wherein the number of repurchase accounts comprises a number of a first kind of accounts that initiate repurchase requests based on interactive operation on the repurchase request information displayed in the play interface of the live broadcast room and a number of a second kind of accounts that initiate repurchase requests based on the target resource in a historical order list, wherein the first kind of accounts do not include any of the second kind of accounts; and
display the number of repurchase accounts in the play interface of the live broadcast room.

In an embodiment, the apparatus 800 further includes an anchor response synchronizing unit, configured to:
receive response information of an anchor account of the live broadcast room to the repurchase request information;
synchronize the response information to the first terminal, so as to display the response information in a play interface of the first terminal.

In an embodiment, the anchor response synchronizing unit is further configured to:
in response to the response information indicating accepting the repurchase request for the target resource, obtain a broadcast starting time of the target resource set by the anchor account;
synchronize the broadcast starting time to the first terminal, so as to display the broadcast starting time in the play interface of the first terminal.

In an embodiment, the apparatus 800 further includes a response counting unit, configured to:
in response to the response information indicating ignoring the repurchase request for the target resource, obtain a number of times of ignoring repurchase requests in historical response information of the anchor account for the repurchase request information in the live broadcast room;
in response to the number of times reaching a set threshold, close a repurchase channel of the live broadcast room.

In an embodiment, the anchor response synchronizing unit is further configured to:
cancel displaying the repurchase request information of the target resource in a live broadcast interface of the live broadcast room after receiving the response information of the anchor account of the live broadcast room to the repurchase request information.

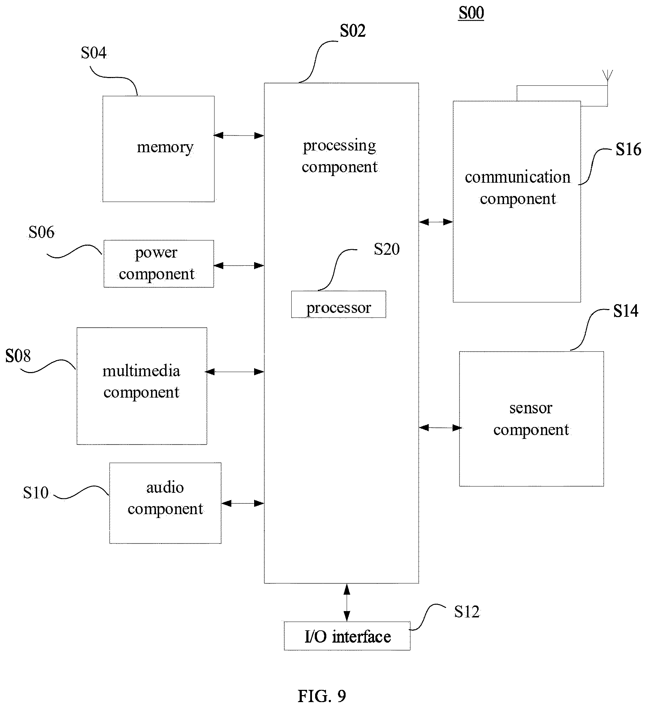

Based on the same inventive concept, as illustrated in FIG. 9, embodiments of the disclosure provide a computer device. For example, the electronic device 900 may be a mobile phone, a computer, a digital broadcasting terminal, a message transceiver device, a game console, a tablet device, a medical device, a fitness device and a personal digital assistant.

As illustrated in FIG. 9, the electronic device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the electronic device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the electronic device 900. Examples of such data include instructions for any applications or methods operated on the electronic device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the electronic device 900. The power component 906 may include a power management system, one or more power sources, and any other components associated with the generation, management, and distribution of power in the electronic device 900.

The multimedia component 908 includes a screen providing an output interface between the electronic device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front-facing camera and/or a rear-facing camera. When the electronic device 900 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 910 is configured to output and/or input audio signals. For example, the audio component 910 includes a microphone (MIC) configured to receive an external audio signal when the electronic device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the electronic device 900. For instance, the sensor component 914 may detect an open/closed status of the electronic device 900, relative positioning of components, e.g., the display and the keypad, of the electronic device 900, a change in position of the electronic device 900 or a component of the electronic device 900, a presence or absence of user contact with the electronic device 900, an orientation or an acceleration/deceleration of the electronic device 900, and a change in temperature of the electronic device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the electronic device 900 and other devices. The electronic device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the electronic device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing any method according to the first or second aspect of the embodiments.

As for the apparatus in the above embodiments, the specific mode of operation of each module has been described in detail in the method embodiments, which will not be elaborated here.

FIG. 9 is a block diagram of an electronic device S00 for data processing according to an exemplary embodiment. For example, the electronic device S00 may be a mobile phone, computer, digital broadcast terminal, messaging device, game console, tablet device, medical device, fitness equipment, personal digital assistant, etc.

Referring to FIG. 9, the electronic device S00 may include one or more of the following components: processing component S02, memory S04, power component S06, multimedia component S08, audio component S10, input/output (I/O) interface S12, sensor component S14, and communication component S16.

The processing component S02 typically controls the overall operations of the electronic device S00, such as those associated with display, telephone calls, data communications, camera operations, and recording operations. The processing component S02 may include one or more processors S20 to execute instructions to complete all or part of the steps of the method described above. In addition, the processing component S02 may include one or more modules to facilitate handling interactions between the component S02 and other components. For example, the processing component S02 may include a multimedia module to facilitate interaction between the multimedia component S08 and the processing component S02.

The memory S04 is configured to store various types of data to support operation on the electronic device S00. Examples of such data include instructions for any application or method used to operate on the electronic device S00, contact data, phone book data, messages, pictures, videos, etc. Memory S04 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component S06 supplies power to various components of the electronic device S00. The power component S06 may include a power management system, one or more power supplies, and other components associated with generating, managing, and distributing power for the electronic device S00.

The multimedia component S08 includes a screen providing an output interface between the electronic device S00 and the user. In some embodiments, screens can include liquid crystal displays (LCD) and touch panels (TP). If the screen includes a touch panel, the screen can be implemented as a touch screen to receive input signals from the user. The Touch panel includes one or more touch sensors to sense touch, sliding, and gestures on the touch panel. The touch sensor can not only sense the boundaries of a touch or sliding action, but also detect the duration and pressure associated with the touch or sliding operation. In some embodiments, the multimedia component S08 includes a front camera and/or rear camera. When the electronic device S00 is in operation mode, such as shooting mode or video mode, the front camera and/or rear camera can receive external multimedia data. Each front camera and rear camera can be a fixed optical lens system or have focal length and optical zoom capabilities.

The audio component S10 is configured to output and/or input audio signals. For example, the audio component S10 includes a microphone (MIC) that is configured to receive external audio signals when the electronic device S00 is in operational modes such as call mode, record mode, and speech recognition mode. The received audio signal can be further stored in memory S04 or sent via communication module S16. In some embodiments, the audio component S10 also includes a speaker for output audio signals.

The I/O interface S12 provides the interface between the processing component S02 and the peripheral interface module, which can be a keyboard, click wheel, button, etc. These buttons may include but are not limited to: home button, volume button, start button and lock button.

The sensor components S14 consists of one or more sensors used to provide various aspects of the status assessment for the electronic equipment S00. For example, the sensor component S14 can detect the electronic device S00 open/close state, the relative positioning of the component, such as the component for the electronic device S00 display and keypad, the sensor component S14 can also detect the electronic device S00 or electronic device S00 a component of the position change, Presence or absence of contact between user and electronic device S00, azimuth or acceleration/deceleration of electronic device S00 and temperature change of electronic device S00. The sensor assembly S14 may include proximity sensors configured to detect the presence of nearby objects in the absence of any physical contact. The sensor assembly S14 can also include optical sensors, such as CMOS or CCD image sensors, for use in imaging applications. In some embodiments, the sensor assembly S14 may also include an acceleration sensor, a gyroscope sensor, a magnetic sensor, a pressure sensor, or a temperature sensor.

The communication component S16 is configured to facilitate wired or wireless communication between the electronic device S00 and other devices. The electronic device S00 can connect to wireless networks based on communication standards, such as WiFi, carrier networks, or a combination of them. In an exemplary embodiment, the communications component S16 receives broadcast signals or broadcast-related information from an external broadcast management system via a broadcast channel. In an exemplary embodiment, the communications component S16 also includes a near field communication (NFC) module to facilitate short-range communication. For example, the NFC module can be implemented based on radio frequency identification (RFID) technology, Infrared Data Association (IrDA) technology, ultra wideband (UWB) technology, Bluetooth (BT) technology and other technologies.

In an example embodiment, the electronic device S00 may be implemented by one or more application specific integrated circuit (ASIC), digital signal processor (DSP), digital signal processing equipment (DSPD), programmable logic device (PLD) and field programmable gate array (FPGA), controller, microcontroller, microprocessor and other electronic components, to perform the method implemented on the user device side.

In an example embodiment, a computer readable storage medium containing instructions is also provided, such as memory S04 containing instructions, which can be executed by the processor 820 of the device S00 to accomplish the above method. Optionally, computer readable storage media may be ROM, random access memory (RAM), CD-ROM, magnetic tape, floppy disks, and optical data storage devices.

In exemplary embodiments, a computer program product is also provided, including computer instructions which, when executed by the processor, implement the above method.

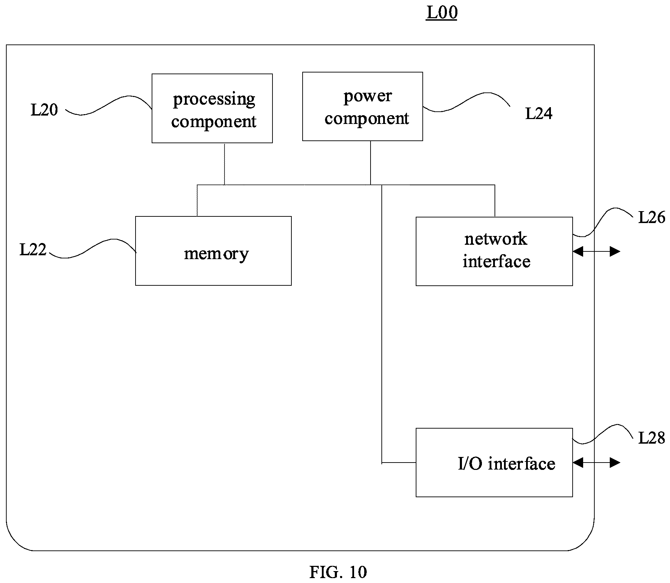

FIG. 10 is a block diagram of an electronic device L00 for data processing according to an exemplary embodiment. For example, the electronic device L00 may be a server. The electronic device L00 includes the processing component L20, which in turn includes one or more processors, and memory resources represented by memory L22 for storing instructions, such as applications, that can be executed by the processing component L20. Applications stored in memory L22 may include one or more modules of each corresponding to a set of instructions. In addition, the processing component L20 is configured to execute instructions to execute the method implemented on the server side by the above embodiments.

The electronic device L00 can also include a power module L24 configured to perform power management for the electronic device L00, a wired or wireless network interface L26 configured to connect the electronic device L00 to the network, and an input/output (I/O) interface L28. The electronic device L00 can operate operating systems based on memory L22, such as Windows ServerTM, Mac OS XTM, UnixTM,LinuxTM, FreeBSDTM or similar.

In an exemplary embodiment, a storage medium including instructions, such as memory L22 including instructions, is also provided, and the instructions can be executed by the processor of the electronic device L00 to complete the server-side implementation of the embodiment. The storage medium may be a non-temporary computer readable storage medium, for example, the non-temporary computer readable storage medium may be ROM, random access memory (RAM), CD-ROM, magnetic tape, floppy disk and optical data storage device, etc.

In an exemplary embodiment, a computer readable storage medium including instructions is also provided, such as memory L22 including instructions, which can be executed by processing component L20 of device L00 to accomplish the above method. Optionally, computer readable storage media can be ROM, random access memory (RAM), CD-ROM, magnetic tape, floppy disks, and optical data storage devices.

In exemplary embodiments, a computer program product is also provided, including computer instructions which, when executed by the processor, are steps to implement the method.

Other embodiments of this disclosure will be readily available to those skilled in the field after considering the specification and the practice of the invention disclosed herein. This application is intended to cover any variation, use or adaptation of this disclosure that follows the general principles of this disclosure and includes common knowledge or conventional techniques in the field of technology not disclosed in this disclosure. The specifications and embodiments are deemed to be exemplary only and the true scope of this disclosure is indicated by the attached claims.

It should be understood that this disclosure is not limited to the exact structure described above and shown in the attached drawings, and that various modifications and changes may be made without leaving its scope. The scope of this disclosure is limited only by the attached claims.

## Claims

1. A method for information interaction in a live broadcast room, applied to a first terminal, comprising:
receiving a repurchase request initiated against a target resource in historical order information (210);
in response to the repurchase request, in a live state of a live broadcast room corresponding to an order of the target resource, playing a live broadcast screen of the live broadcast room, and displaying repurchase request information corresponding to the target resource in a play interface (220).

2. The method of claim 1, further comprising:
obtaining response information of an anchor account of the live broadcast room to the repurchase request; and
displaying the response information in the play interface.

3. The method of claim 2, further comprising:
in response to the response information indicating accepting the repurchase request, obtaining a broadcast starting time of the target resource set by the anchor account; and
displaying the broadcast starting time in the play interface.

4. The method of claim 2 or 3, further comprising:
cancelling display of the repurchase request information in the play interface after obtaining the response information of the anchor account.

5. The method of any claims 1-4, further comprising:
obtaining a number of repurchase accounts corresponding to the target resource, wherein the number of repurchase accounts comprises a number of a first kind of accounts that initiate repurchase requests based on interactive operation on the repurchase request information displayed in the live broadcast room and a number of a second kind of accounts that initiate repurchase requests based on the target resource in the historical order information, wherein the first kind of accounts do not include any of the second kind of accounts; and
displaying the number of repurchase accounts corresponding to the target resource in the play interface of the live broadcast room.
especially, displaying the number of repurchase accounts corresponding to the target resource in the play interface comprises:
displaying a bullet screen corresponding to the target resource in the play interface, wherein the bullet screen comprises information of the target resource and a participation control;
wherein, the participation control is configured to initiate the repurchase request for the target resource when triggered.

6. The method of any of claims 1-5, wherein, the historical order information comprises a repurchase control for initiating a repurchase request for repurchasable resources, the repurchasable resources refer to resources purchased through live broadcast rooms;
receiving the repurchase request initiated against the target resource in historical order information comprises:
receiving the repurchase request initiated against the target resource through the repurchase control.

7. The method of any of claims 1-6, further comprising:
receiving a trigger operation on a preset order entry in the play interface of the live broadcast room;
in response to the trigger operation, obtaining the historical order information of a current user account, wherein the historical order information comprises order information associated with the live broadcast room;
displaying the historical order information.

8. A method for information interaction in a live broadcast room, applied to a second terminal, comprising:
receiving repurchase request information for a target resource sent by a first terminal in a live state of a live broadcast room, wherein the target resource is a historical broadcasting resource of the live broadcast room (610);
in response to the repurchase request information for the target resource meeting a preset condition, displaying the repurchase request information corresponding to the target resource in a play interface of the live broadcast room (620).

9. The method of claim 8, wherein the preset condition comprises at least one of:
a number of repurchase accounts corresponding to the target resource reaching a set number,
a number of historical broadcast times of the target resource reaching a set number of times,
a price value of the target resource reaching a set price value.

10. The method of claim 8 or 9, further comprising:
obtaining a number of repurchase accounts corresponding to the target resource, wherein the number of repurchase accounts comprises a number of a first kind of accounts that initiate repurchase requests based on interactive operation on the repurchase request information displayed in the play interface of the live broadcast room and a number of a second kind of accounts that initiate repurchase requests based on the target resource in a historical order list, wherein the first kind of accounts do not include any of the second kind of accounts; and
displaying the number of repurchase accounts in the play interface of the live broadcast room.

11. The method of claim 8 or 9, further comprising:
receiving response information of an anchor account of the live broadcast room to the repurchase request information;
synchronizing the response information to the first terminal, so as to display the response information in a play interface of the first terminal.

12. The method of claim 11, further comprising:
in response to the response information indicating accepting the repurchase request for the target resource, obtaining a broadcast starting time of the target resource set by the anchor account;
synchronizing the broadcast starting time to the first terminal, so as to display the broadcast starting time in the play interface of the first terminal.

13. The method of claim 11, further comprising:
in response to the response information indicating ignoring the repurchase request for the target resource, obtaining a number of times of ignoring repurchase requests in historical response information of the anchor account for the repurchase request information in the live broadcast room;
in response to the number of times reaching a set threshold, closing a repurchase channel of the live broadcast room.

14. The method of claim 11, further comprising:
cancelling displaying the repurchase request information of the target resource in a live broadcast interface of the live broadcast room after receiving the response information of the anchor account.

15. An apparatus (700) for information interaction in a live broadcast room, applied to a first terminal, comprising:
a request receiving unit (710), configured to receive a repurchase request initiated against a target resource in historical order information;
a request responding unit (720), configured to, in response to the repurchase request, when a live broadcast room corresponding to an order of the target resource is in a live state, display a live broadcast screen of the live broadcast room, and display repurchase request information corresponding to the target resource in a play interface.
